# EUROPEAN PATENT SPECIFICATION

(11) **EP 2 103 031 B1**
(45) Date of publication and mention of the grant of the patent: **01.11.2017**
(21) Application number: 07868864.5
(22) Date of filing: 27.11.2007
(51) Int. Cl.: H04L 9/00, H04L 29/06

(54) **AUTHENTICATION OF E-COMMERCE TRANSACTIONS USING A WIRELESS TELECOMMUNICATIONS DEVICE**
AUTHENTIFIZIERUNG VON ELEKTRONISCHEN HANDELSTRANSAKTIONEN ÜBER EINE DRAHTLOSE TELEKOMMUNIKATIONSVORRICHTUNG
AUTHENTIFICATION DE TRANSACTIONS COMMERCIALES ÉLECTRONIQUES AU MOYEN D'UN DISPOSITIF DE TÉLÉCOMMUNICATIONS SANS FIL

(30) Priority: 27.11.2006 US 563620
(43) Date of publication of application: 23.09.2009
(73) Proprietor: QUALCOMM Incorporated, San Diego, CA 92121 (US)
(72) Inventor: JACOBS, Paul E., San Diego, California 92121 (US); JAIN, Nikhil, San Diego, California 92121 (US)
(74) Representative: Dunlop, Hugh Christopher
(86) International application number: PCT/US2007/085671
(87) International publication number: WO 2008/067332

(56) References cited:
- US-A1- 2003 208 444
- US-A1- 2006 206 709

## Description

### BACKGROUND

### Field

The present disclosure relates generally to telecommunications, and more particularly, to systems and techniques to authenticate e-commerce transactions using a wireless telecommunications device.

### Background

Electronic commerce (e-commerce) over the Internet is expanding at an astounding rate. Today, even the most unsophisticated consumer can transact business over the Internet with just a few keystrokes on a computer, making the Internet perhaps the most convenient sales medium in the world. Most companies have successfully exploited this new sales medium for a number of years, and retailers have followed suit with major on-line shopping sites. As e-commerce continues to grow, there is an increasing need to address security concerns.

An e-commerce transaction typically involves a process whereby a consumer on a computer navigates through a merchant's web-site to locate certain items. These items may be purchased by a consumer through a series of computer entries in response to various screen displays, one of which may be a presentation of a range of payment options. The most common online payment option is payment by credit card, which requires the consumer to enter the card number, along with the cardholder's name and the expiration date of the card. However, before the consumer enters such information, the merchant's web-site switches to a secure mode of operation. In the secure mode, all communication with the merchant's web-site is encrypted in a way that guards against eavesdroppers stealing the credit card information.

Although cryptography has proven to be fairly effective in preventing credit card information theft on the Internet, it does not provide any protection against the theft of the credit card itself. A stolen credit card may be used by a culprit to purchase products from various merchants on the Internet without detection. Accordingly, there is a need in the art for additional security measures that reduce or eliminate the risk that an unauthorized user of a credit card can conduct business on the Internet.

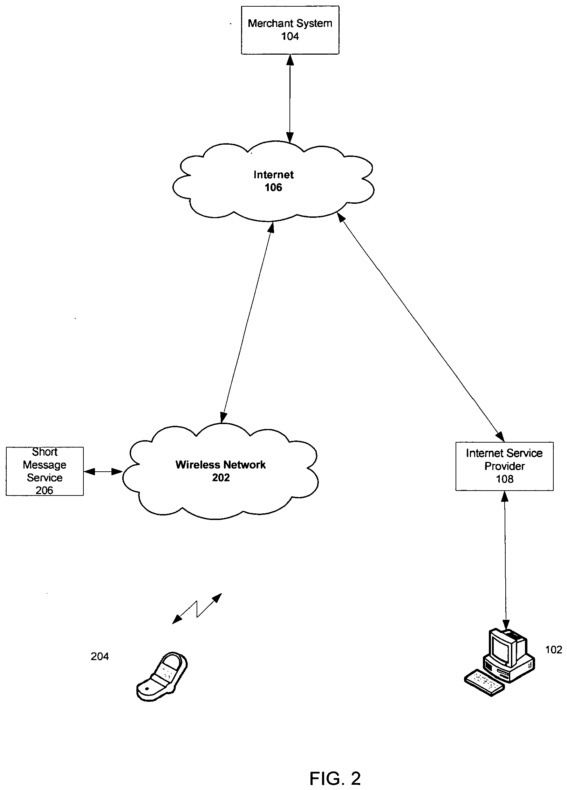

US 2006/0206709 discusses an authentication service in which a user uses a mobile phone for authentication. As shown in Figure 2, the user communicates with a provider via a secure transaction server (STS). When a user attempts to login to a websitc, the website sends an authentication message to the STS. At the same time, the user starts a mobile ID application on the mobile phone, selects the desired action to authorize and enters a PIN. In response, the mobile phone sends an authentication message to the STS, which compares the authentication messages from the user and the provider. If the two messages agree, the STS sends a positive message to the provider.

### SUMMARY

Aspects of the invention are set out in the accompanying claims.

It is understood that other aspects will become readily apparent to those skilled in the art from the following detailed description, wherein it is shown and described only various aspects of the invention by way of illustration. As will be realized, the invention is capable of other and different aspects and its several details are capable of modification in various other respects, all without departing from the spirit and scope of the present invention. Accordingly, the drawings and detailed description are to be regarded as illustrative in nature and not as restrictive.

### BRIEF DESCRIPTION OF THE DRAWINGS

Various aspects of a communications system are illustrated by way of example, and not by way of limitation, in the accompanying drawing, wherein:
FIG. 1 is a conceptual block diagram illustrating an example of an e-commerce transaction;
FIG. 2 is a conceptual block diagram illustrating an example of an e-commerce transaction requiring authorization from a wireless telecommunications device;
FIG. 3 is a conceptual block diagram illustrating the use of a server registry in an e-commerce transaction requiring authorization from a wireless telecommunications device;
FIG. 4 is a conceptual block diagram illustrating one aspect of a merchant system;
FIG. 5 is a conceptual block diagram illustrating one aspect of a registry server; and
FIG. 6 is a conceptual block diagram illustrating one aspect of a wireless telecommunications device.
FIG. 7 is a functional block diagram of an aspect of a merchant system.
FIG. 8 is a functional block diagram of an aspect of a registry server.
FIG. 9 is a functional block diagram of an aspect of an authentication device.
FIG. 10 is a functional block diagram of an aspect of a telecommunications device.

### DETAILED DESCRIPTION

The detailed description set forth below in connection with the appended drawings is intended as a description of various aspects of the invention and is not intended to represent the only aspects in which the invention may be practiced. The detailed description includes specific details for the purpose of providing a thorough understanding of the invention. However, it will be apparent to those skilled in the art that the invention may be practiced without these specific details. In some instances, well known structures and components are shown in block diagram form in order to avoid obscuring the concepts of the invention.

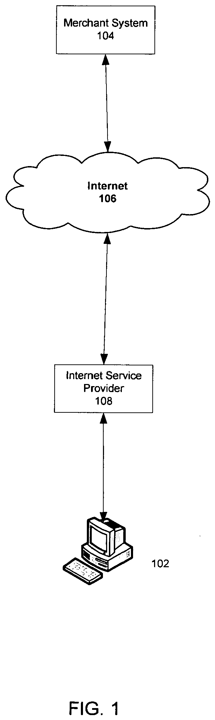

FIG. 1 is a conceptual diagram illustrating an example of a telecommunications system which supports e-commerce transactions. In this example, a user on a computer 102 may conduct an e-commerce transaction with a merchant system 104 over the Internet 106. The user initiates the transaction by launching a software application on the computer 102, or by some other enabling means. At the same time, or thereabouts, the computer 102 establishes a network connection with an Interworking Function (IWF) (not shown) in an Internet service provider (ISP) 108 over a standard twisted pair telephone line, a digital subscriber line (DSL), a cable modem, or over some other suitable medium. The computer 102 then uses its Internet Protocol (IP) address to communicate with the merchant system 104 over the Internet 106, enabling higher level software applications on both systems to work together to conduct an e-commerce transactions. If the computer 102 does not have a permanent Internet protocol (IP) address, then the ISP 106 assigns it a temporary one.

The e-commerce transaction is typically conducted in a secure fashion using encryption techniques such as, by way of example, symmetric and asymmetric key cryptography. Additional security measures may be achieved by requiring an entity, other than the computer or merchant system, to authorize the transaction. In one aspect, the other entity or "authenticating device" is a mobile telephone, or other wireless or wired telecommunications device. In this aspect, the owner of mobile telephone, or the "consumer," is the person financially responsible for the e-commerce transaction, which may or may not be the user on the computer 102. An example of this procedure will now be described with reference to FIG. 2.

FIG. 2 depicts a telecommunications system with a wireless network 202 that connects any number of wireless telecommunication devices to the Internet 106. The wireless network 202 may be a wide area network (WAN) such as a Code Division Multiple Access (CDMA) network, a Global System for Mobile Communications (GSM) network, a General Packet Radio Service (GPRS) network, a Universal Mobile Telecommunications System (UMTS) network, or any other suitable Wide Area Network (WAN). Alternatively, the wireless network 202 may be a Local Area Network (LAN) such as 802.11, Home RF, Bluetooth, Ultra-Wide Band (UWB), or the like. Those skilled in the art will be readily able to determine the particular wireless network best suited for any particular application based on the system parameters and the overall design constraints imposed on the telecommunications system 100.

The wireless network 202 shown in FIG. 2 provides a means by which a mobile telephone 204 connects to the Internet 106 to authorize e-commerce transactions between the computer 102 and the merchant system 104. In this example, the computer 102 establishes a connection with the merchant system 104 over the Internet 106 using the same or similar procedure described above in connection with FIG. 1. At the same time, or thereabouts, the user enters his or her mobile telephone number into the computer 110, along with other information required to conduct the e-commerce transaction. The mobile telephone number enables the merchant system 104 to communicate with the mobile telephone 204 to authorize the transaction before it is billed to the consumer's account, i.e., the mobile telephone owner's account. The communications may take place through an SMS 206, or directly through the wireless network 202. The consumer can then either authorize or reject the transaction using the mobile telephone 104 to send a response to the merchant system 104. The response can be generated by striking a designated key, entering a pin number, using biometrics, and/or by any other suitable way. The e-commerce transaction is completed by the merchant system 104 only if the consumer authorizes it. Once completed, the charges incurred by the user on the computer 102 can be collected against the mobile telephone number, and in some cases, included in the consumer's telephone bill.

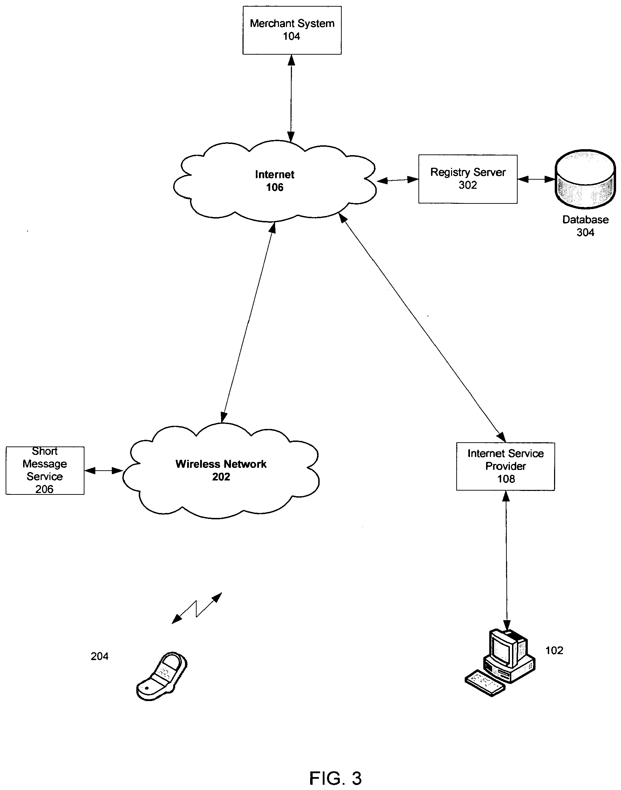

In an alternative aspect of the telecommunications system 100, a telecommunications device, such as the computer 102, must first be registered with a registry server before conducting an e-commerce transaction that is billed to a consumer's mobile telephone account. An example of this aspect will be described with reference to FIG. 3.

FIG. 3 is similar to the telecommunications system 100 of FIG. 2, except for the addition of a registry server 302 connected to the Internet 106. Referring to FIG. 3, the consumer registers his or her computer 102 by conducting a registration procedure with the registry server 302 from the computer 102. The registration procedure begins with the launching of a software application on the computer 102, or by some other enabling means. The consumer's mobile telephone number is then entered into the computer 102, along with a registration request. At the same time, or thereabouts, the computer 102 establishes an Internet connection through the ISP 108. The computer 102 uses the Internet connection to send information to the registry server 302. The information includes the IP address for the computer 102, the mobile telephone number entered by the consumer, and the registration request.

The registry server 302 may provide a variety of functions including authorizing the registration request and maintaining a database 304 of telecommunication devices registered by the consumer. In the aspect of the telecommunications system 100 shown in FIG. 3, the registry server 302 obtains authorization for the registration request in much the same way as the merchant system 104 authorizes an e-commerce transaction. That is, the registry server 302 communicates with the mobile telephone 204, via the SMS 206 or directly through the wireless network 202, requesting authorization to register the computer 102. The consumer can respond to the call by striking a designated key, entering a pin number, using biometrics, and/or by any other suitable way. The response is sent from the mobile telephone 204 to the registry server 302. If the response authorizes the registration request, the registry server 302 maps the IP address for the computer 102 to the consumer's mobile telephone number and stores the result in the database 304.

As indicated above, not all computers have a permanent IP address. In some cases, computers, and other telecommunication devices, are assigned a temporary address from a pool of IP addresses maintained by their respective ISP. A temporary address is generally assigned to a computer (or other telecommunications device) for the duration of an Internet session. When a computer with a temporary IP address completes its Internet session, the temporary IP address is returned to the pool of IP addresses for assignment by the ISP to another telecommunications device. An ISP that operates in this fashion must update the database maintained by the registry server 302 every time a new temporary IP address is assigned to a registered telecommunications device. Returning to FIG. 3, a user (which may or may not be the consumer) on the computer 102 initiates an e-commerce transaction with the merchant system 104 by launching a software application, or by some other enabling means. The computer 102 then establishes a network connection with the IWF in ISP 108. If the computer 102 does not have a permanent IP address, then the ISP 106 assigns a temporary IP address to the computer 102 and updates the database 304 maintained by the registry server 302. The IP address is used by the computer 102 to establish a connection with the merchant system 104 over the Internet 106. At the same time, or thereabouts, the user enters into the computer 102 certain information required to conduct the e-commerce transaction including the consumer's mobile telephone number. This information, along with the computer's IP address, is sent by the computer 102 to the merchant system 104 over the Internet 106. The merchant system 104 establishes an Internet connection with the registry server 302 and sends a query to determine whether the computer 102 has been registered by the consumer, i.e., whether the database 304 includes an entry mapping the computer's IP address to the consumer's mobile telephone number. If the registry server 302 confirms that the computer 102 is registered, the merchant system 104 uses the mobile telephone number to send an authorization request over the wireless network 202 to the mobile telephone 104. The e-commerce transaction is completed by the merchant system 104 only if the consumer on the mobile telephone 104 authorizes it. Once completed, the charges incurred by the user on the computer 102 can be collected against the consumer's mobile telephone number, and in some cases, included in the consumer's telephone bill.

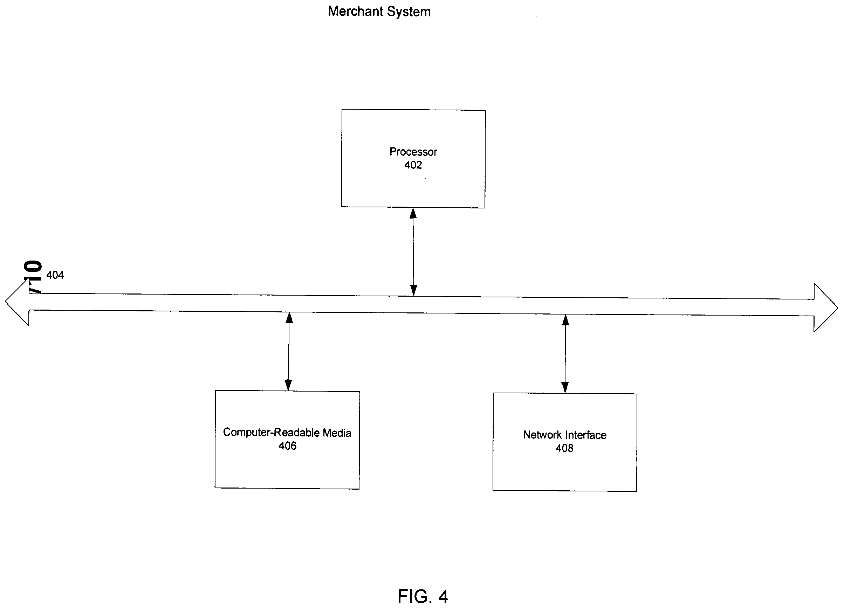

FIG. 4 is a simplified block diagram illustrating the functionality of the merchant system 104. In at least one aspect, the merchant system 104 includes at least one processor 402 which communicates with a number of peripheral devices via a system bus 404. The processor 402 may be implemented in hardware, software, firmware, or any combination thereof. Typically, the processor 402 will be implemented with a microprocessor that supports various software applications. These software applications provide a number of functions such as supporting e-commerce transactions, including obtaining the appropriate authorizations for such transactions.

The peripheral devices may include computer-readable media 406 comprising, by way of example, volatile and non-volatile memory. The volatile memory may be Dynamic Random Access Memory (DRAM), Static Random Access Memory (SRAM), or any other suitable high speed memory device. The non-volatile memory may include a magnetic hard drive, an optical disk, and/or any other form of storage for large amounts of data and software applications. Software applications and data from non-volatile memory may be written to volatile memory to increase the speed of memory access by the processor 402. Those skilled in the art will recognize that the term "computer-readable media" includes any type of storage device(s) that are accessible by the processor 402 and also encompasses a carrier wave that encodes a data signal.

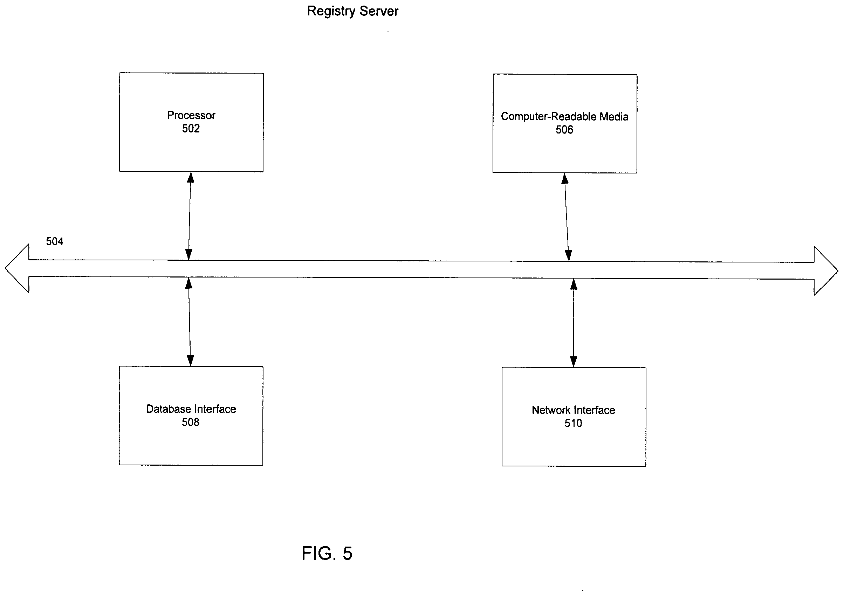

The peripheral devices may also include various interfaces including a network interface or modem 408. The network interface or modem 408 may be used provide protocol translation to support communications by the merchant system 104 over the Internet. FIG. 5 is a simplified block diagram illustrating the functionality of the registry server 302. The architecture of the registry sever 302 is similar to that of the merchant system 104. A system bus 504 is used to connect one or more processors 502 to any number of peripheral devices. The processor 502 may be implemented in hardware, software, firmware, or any combination thereof, but typically will comprise a microprocessor that supports various software applications. The software applications may reside in computer-readable media 506 attached to the system bus 504. The computer-readable media 506 may include volatile and non-volatile memory similar to that described in connection with the merchant system 104 (see FIG. 4). These software applications provide a number of functions that, among other things, maintain a database of telecommunication devices registered to a consumer owner.

A database interface 508 connected to the system bus 504 allows the processor 502 to access the database 304 (see FIG. 3). In at least one aspect of the registry server 302, the database is used to map the consumer's mobile telephone number to the IP addresses of his or her telecommunication devices. The database may be external to the registry server 304 with a wireless or wire-line T1 or T3 link, fiber optic connection, Ethernet, or other IP connection. Alternatively, the database may be fully or partially integrated into the registry server 304, either on the hard drive or some other suitable non-volatile memory. A network interface or modem 510 may be used provide protocol translation to support communications between the registry server 302 and the Internet.

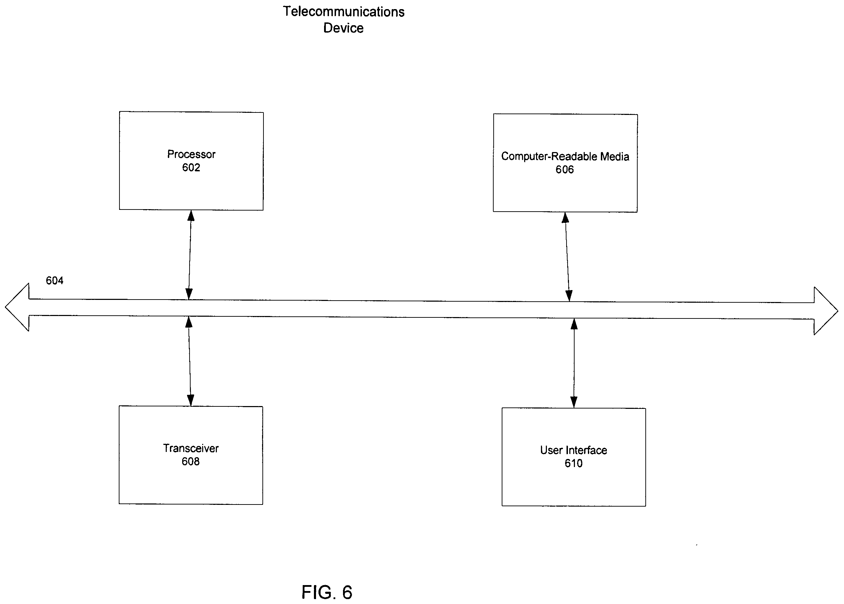

FIG. 6 is a simplified block diagram illustrating the functionality of a telecommunications device. The telecommunications device can serve as an authenticating device, such as the mobile telephone 204 shown in FIGS. 2-3 or the like. Alternatively, the telecommunications device can be an e-commerce transaction terminal, such as the computer 102 shown in FIGS. 1-3, or any other suitable access terminal that can support e-commerce transactions.

The telecommunications device, much like the servers discussed above, includes at least one processor 602 which communicates with a number of peripheral devices via a system bus 604. The processor 402 will typically be implemented with a microprocessor supporting various software applications, but may be implemented in hardware, software, firmware, or any combination thereof. In the case of an e-commerce transaction terminal (and in some aspects of the authenticating device), the software applications provide a means to conduct e-commerce transactions over the Internet. The software applications running in the authenticating device also allows the consumer to authorize e-commerce transactions by other devices. The software applications may reside in computer-readable media 606 attached to the system bus 604. The computer-readable media 606 may include volatile and non-volatile memory similar to that described in connection with the merchant system 104 (see FIG. 1).

The peripheral devices may also include a transceiver 608 to support the physical interface between the telecommunications device and the network. The transceiver 608 may be a wireless transceiver or one capable of driving a wired connection, such as standard twisted pair telephone line modem, a DSL modem, cable modem, fiber optic modem, Ethernet modem, T1 or T3 modem, or any other modem suitable to support the physical interface to the network.

The remaining peripheral device shown in FIG. 6 is a user interface 610. The user interface may include any number of devices, including by way of example, a keypad, display, mouse, joystick, etc. These devices allow a user of the telecommunications device to perform various tasks such as conducting e-commerce transactions over the Internet, and in the case of an authenticating device, authorize e-commerce transactions by other devices.

The manner in which the merchant system 104, registry server 304, and telecommunication devices are implemented in practice will vary depending on the particular application and the design constraints imposed on the overall system. Those skilled in the art will recognize the interchangeability of hardware, firmware, and software configurations under these circumstances, and how best to implement the described functionality for each particular application.

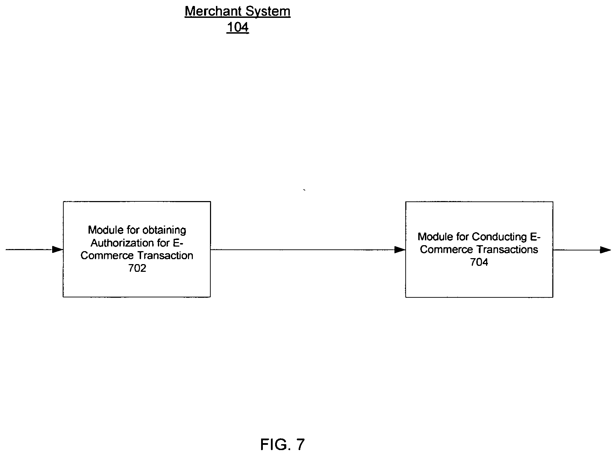

FIG. 7 is a functional block diagram of an aspect of a merchant system. The merchant system 104 includes a module for conducting an e-commerce transaction with a telecommunications device on a consumer's account 704, and a module for obtaining authorization from an authentication device of the consumer before completing the e-commerce transaction 702.

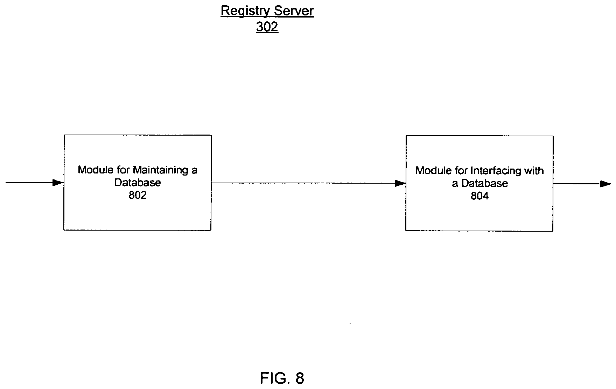

FIG. 8 is a functional block diagram of an aspect of a registry server. The registry server 302 includes a module for interfacing with a database of telecommunication devices authorized to conduct e-commerce transactions on a consumer's account 802, and module for maintaining the database by mapping each of the authorized telecommunication devices to information identifying an authentication device of the consumer 804.

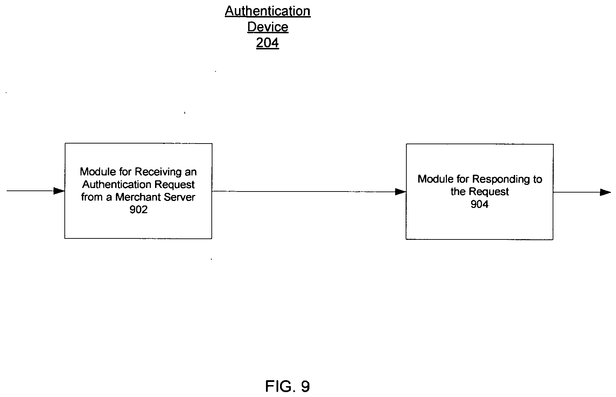

FIG. 9 is a functional block diagram of an aspect of an authentication device. The authentication device 204 includes a module for receiving a request from a merchant system to authorize an e-commerce transaction between a merchant system and a telecommunications device on the consumer's account 902, and module for responding to the request 904.

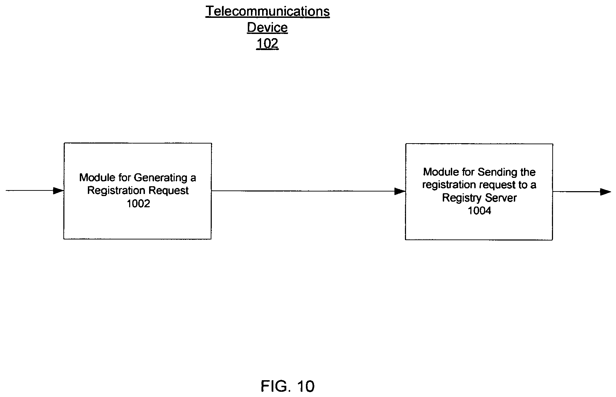

FIG. 10 is a functional block diagram of an aspect of a telecommunications device. The telecommunications 102 device includes a module for generating a request to a registry server to add the telecommunications device to a database authorizing the telecommunications device to conduct e-commerce transaction with a merchant system on a consumer's account 1002, the request including information identifying an authentication device of the consumer, and module for sending the request to the registry server 1004.

The various illustrative logical blocks, modules, circuits, elements, and/or components described in connection with the aspects disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing components, e.g., a combination of a DSP and a microprocessor, a plurality of microprocessors, one or more microprocessors in conjunction with a DSP core, or any other such configuration.

The methods or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## Claims

1. A merchant system (104) for conducting an e-commerce transaction with a telecommunications device (102) on a consumer's account, the merchant system (104) **characterized by**:
means for receiving from the telecommunications device (102) information including an IP address for the telecommunications device (102) and a telephone number of a mobile telephone (204) of the consumer;
means for sending the received information to a registry server (302) to determine whether the telecommunications device (102) has been registered by determining that a database (304) maintained by the registry server (302) includes an entry mapping the IP address of the telecommunications device (102) to the mobile telephone number, wherein the database (304) maps each telecommunications device authorized to conduct an e-commerce transaction with the merchant system (104) on the consumer's account to information identifying the mobile telephone (204) of the consumer;
means for obtaining, before completing the e-commerce transaction, confirmation from the registry server (302) that the telecommunications device (102) is registered;
means for sending an authorization request to the mobile telephone (204); and
means for receiving authorization from the mobile telephone (204) of the consumer before completing the e-commerce transaction.

2. The merchant system of claim 1, wherein the means for obtaining authorization is configured to obtain authorization from the mobile telephone (204) through a SMS in a wireless network.

3. The merchant system of claim 1 or 2, wherein the telecommunications device (102) is a computer.

4. A method of conducting e-commerce transactions between a telecommunications device (102) on a consumer's account and a merchant system (104), the method **characterized by**:
receiving from the telecommunications device (102) information including an IP address for the telecommunications device (102) and a telephone number of a mobile telephone (204) associated with the consumer;
sending the received information to a registry server (302) to determine whether the telecommunications device (102) has been registered by determining that a database (304) maintained by a registry server (302) includes an entry mapping the IP address of the telecommunications device (102) to the mobile telephone number, wherein the database (304) maps each telecommunications device authorized to conduct an e-commerce transaction with the merchant system (104) on the consumer's account to information identifying the mobile telephone (204) of the consumer;
obtaining confirmation from the registry server (302) that the telecommunications device (102) is registered before completing the e-commerce transaction;
sending an authorization request to the mobile telephone (204); and
receiving authorization from the mobile telephone (204) of the consumer before completing the e-commerce transaction.

5. The method of claim 4 wherein the database (304) is maintained by mapping the mobile telephone number of the mobile telephone to each telecommunications device in the database.

6. The method of claim 4 or 5, wherein the telecommunications device (102) is a computer.

7. The method of claim 4 wherein the merchant system (104) communicates with the mobile telephone (204) through a SMS in a wireless network.

## Patentansprüche

1. Ein Händlersystem (104) zum Durchführen einer E-Commerce-Transaktion mit einer Telekommunikationseinrichtung (102) auf einem Konto eines Verbrauchers, wobei das Händlersystem (104) **gekennzeichnet ist durch**:
Mittel zum Empfangen, von der Telekommunikationseinrichtung (102) von Information, die eine IP-Adresse für die Telekommunikationseinrichtung (102) und eine Telefonnummer eines Mobiltelefons (204) des Verbrauchers aufweist;
Mittel zum Senden der empfangenen Information an einen Registerserver (302) zum Bestimmen, ob die Telekommunikationseinrichtung (102) registriert worden ist **durch** Bestimmen, dass eine Datenbank (304), die durch den Registerserver (302) geführt wird, einen Eintrag beinhaltet, der die IP-Adresse der Telekommunikationseinrichtung (102) auf die Mobiltelefonnummer abbildet, wobei die Datenbank (304) jede Telekommunikationseinrichtung, die autorisiert ist zum Durchführen einer E-Commerce-Transaktion mit dem Händlersystem (104) auf dem Konto des Nutzers auf Information abbildet, die das Mobiltelefon (204) des Verbrauchers identifiziert;
Mittel zum Erlangen, vor dem Abschließen der E-Commerce-Transaktion, einer Bestätigung von dem Registerserver (302), dass die Telekommunikationseinrichtung (102) registriert ist;
Mittel zum Senden einer Autorisierungsanfrage an das Mobiltelefon (204); und
Mittel zum Empfangen einer Autorisierung von dem Mobiltelefon (204) des Verbrauchers vor dem Abschließen der E-Commerce-Transaktion.

2. Händlersystem nach Anspruch 1, wobei die Mittel zum Erlangen der Autorisierung konfiguriert sind zum Erlangen der Autorisierung von dem Mobiltelefon (204) durch eine SMS in einem Drahtlosnetzwerk.

3. Händlersystem nach Anspruch 1 oder 2, wobei die Telekommunikationseinrichtung (102) ein Computer ist.

4. Ein Verfahren zum Durchführen von E-Commerce-Transaktionen zwischen einer Telekommunikationseinrichtung (102) auf einem Konto eines Verbrauchers und einem Händlersystem (104) wobei das Verfahren **gekennzeichnet ist durch**:
Empfangen, von der Telekommunikationseinrichtung (102), von Information, die eine IP-Adresse für die Telekommunikationseinrichtung (102) und eine Telefonnummer eines Mobiltelefons (204), das mit dem Verbraucher assoziiert ist, aufweist;
Senden der empfangenen Information an einen Registerserver (302) zum Bestimmen, ob die Telekommunikationseinrichtung (102) registriert worden ist **durch** Bestimmen, dass eine Datenbank (304), die **durch** einen Registerserver (302) unterhalten wird, eine Eintrag aufweist, der die IP-Adresse der Telekommunikationseinrichtung (102) auf die Mobiltelefonnummer abbildet, wobei die Datenbank (304) jede Telekommunikationseinrichtung, die autorisiert ist zum Durchführen einer E-Commerce-Transaktion mit dem Händlersystem (104) auf dem Konto des Verbrauchers auf Information abbildet, die das Mobiltelefon (204) des Verbrauchers identifiziert;
Erlangen einer Bestätigung von dem Registerserver (302), dass die Telekommunikationseinrichtung (102) registriert ist vor dem Abschließen der E-Commerce-Transaktion;
Senden einer Autorisierungsanfrage an das Mobiltelefon (204); und
Empfangen einer Autorisierung von dem Mobiltelefon (204) des Verbrauchers vor dem Abschließen der E-Commerce-Transaktion.

5. Verfahren nach Anspruch 4, wobei die Datenbank (304) aufrecht erhalten wird durch Abbilden der Mobiltelefonnummer des Mobiltelefons auf jede Telekommunikationseinrichtung in der Datenbank.

6. Verfahren nach Anspruch 4 oder 5, wobei die Telekommunikationseinrichtung (102) ein Computer ist.

7. Verfahren nach Anspruch 4, wobei das Händlersystem (104) mit dem Mobiltelefon (204) durch eine SMS in einem Drahtlosnetzwerk kommuniziert.

## Revendications

1. Un système marchand (104) destiné à la conduite d'une transaction d'e-commerce avec un dispositif de télécommunications (102) sur un compte de consommateur, le système marchand (104) étant **caractérisé par** :
un moyen de réception à partir du dispositif de télécommunications (102) d'informations contenant une adresse IP pour le dispositif de télécommunications (102) et un numéro de téléphone d'un téléphone mobile (204) du consommateur,
un moyen d'envoi des informations reçues à un serveur d'enregistrement (302) de façon à déterminer si le dispositif de télécommunications (102) a été enregistré par la détermination qu'une base de données (304) entretenue par le serveur d'enregistrement (302) contient une entrée mettant en correspondance l'adresse IP du dispositif de télécommunications (102) avec le numéro de téléphone mobile, où la base de données (304) met en correspondance chaque dispositif de télécommunications autorisé à conduire une transaction d'e-commerce avec le système marchand (104) sur le compte de consommateur avec des informations identifiant le téléphone mobile (204) du consommateur,
un moyen d'obtention, avant l'achèvement de la transaction d'e-commerce, d'une confirmation à partir du serveur d'enregistrement (302) que le dispositif de télécommunications (102) est enregistré,
un moyen d'envoi d'une demande d'autorisation au téléphone mobile (204), et
un moyen de réception d'une autorisation à partir du téléphone mobile (204) du consommateur avant l'achèvement de la transaction d'e-commerce.

2. Le système marchand selon la Revendication 1, où le moyen d'obtention d'une autorisation est configuré de façon à obtenir une autorisation à partir du téléphone mobile (204) par l'intermédiaire d'un SMS dans un réseau sans fil.

3. Le système marchand selon la Revendication 1 ou 2, où le dispositif de télécommunications (102) est un ordinateur.

4. Un procédé de conduite de transactions d'e-commerce entre un dispositif de télécommunications (102) sur un compte de consommateur et un système marchand (104), le procédé étant **caractérisé par** :
la réception à partir du dispositif de télécommunications (102) d'informations contenant une adresse IP pour le dispositif de télécommunications (102) et un numéro de téléphone d'un téléphone mobile (204) associé au consommateur,
l'envoi des informations reçues à un serveur d'enregistrement (302) de façon à déterminer si le dispositif de télécommunications (102) a été enregistré par la détermination qu'une base de données (304) entretenue par un serveur d'enregistrement (302) contient une entrée mettant en correspondance l'adresse IP du dispositif de télécommunications (102) avec le numéro de téléphone mobile, où la base de données (304) met en correspondance chaque dispositif de télécommunications autorisé à conduire une transaction d'e-commerce avec le système marchand (104) sur le compte de consommateur avec des informations identifiant le téléphone mobile (204) du consommateur,
l'obtention d'une confirmation à partir du serveur d'enregistrement (302) que le dispositif de télécommunications (102) est enregistré avant l'achèvement de la transaction d'e-commerce,
l'envoi d'une demande d'autorisation au téléphone mobile (204), et
la réception d'une autorisation à partir du téléphone mobile (204) du consommateur avant l'achèvement de la transaction d'e-commerce.

5. Le procédé selon la Revendication 4 où la base de données (304) est entretenue par la mise en correspondance du numéro de téléphone mobile du téléphone mobile avec chaque dispositif de télécommunications dans la base de données.

6. Le procédé selon la Revendication 4 ou 5, où le dispositif de télécommunications (102) est un ordinateur.

7. Le procédé selon la Revendication 4 où le système marchand (104) communique avec le téléphone mobile (204) par l'intermédiaire d'un SMS dans un réseau sans fil.
